# EUROPEAN PATENT APPLICATION

(11) **EP 4 697 194 A1**
(43) Date of publication of application: **18.02.2026**
(21) Application number: 25195655.3
(22) Date of filing: 13.08.2025
(51) Int. Cl.: G06F 16/2453, G06F 16/21

(54) **QUERY ADVISOR ENGINE**

(30) Priority: 13.08.2024 US 202463682573 P
(71) Applicant: Google LLC, Mountain View, CA 94043 (US)
(72) Inventor: HUANG, Haoyu, Fremont, California, 94555 (US); YUE, Sen, Mountain View, California, 94043 (US); IDICULA, Sam, Mountain View, California, 94043 (US); CHENG, Xun, Mountain View, California, 94043 (US); SHAH, Viral, Mountain View, California, 94043 (US); BERENSON, Maxwell, Mountain View, California, 94043 (US)
(74) Representative: Betten & Resch

(57) **Abstract**

Aspects of the disclosure are directed to a query advisor module that generates recommendations for tuning a query template to improve performance. The recommendations may include suggestions for performing actions, such as rewriting the query, tuning database flags at a session level, fixing table/column statistics, running a vacuum, or planning hints or a SQL Patch. The query advisor may provide recommendations automatically. In other examples, the query advisory may be activated manually. Once the query advisor is enabled, the database advisor may maintain the query plan that was analyzed along with its associated tuning recommendations for later retrieval.

## Description

### CROSS-REFERENCE TO RELATED APPLICATIONS

This application claims the benefit of the filing date of United States Provisional Patent Application No. 63/682,573, filed August 13, 2024, the disclosure of which is hereby incorporated herein by reference.

### BACKGROUND

A database management system (DBMS) is a system for managing one or more databases, and for receiving and resolving queries to the managed database(s). A DBMS can manage one or more tables or relations of data stored on one or more storage devices and forming part of one or more managed databases. The DBMS can read and write to individual rows or columns of the managed tables, including updating, deleting, and adding records.

A DBMS can implement a cache for temporarily storing database data. The cache can store blocks of data representing rows of a base database table. A cached block is invalidated when corresponding blocks of the base table from which the cache block is retrieved are modified after caching the block. The invalidated block no longer reflects the data updated in the base table from which the data is cached.

The DBMS includes a query optimizer, which analyzes structured query language (SQL) queries and determines an efficient execution mechanism. The query optimizer can generate one or more query plans for each query, with each plan being a mechanism used to run the query. Typically, the query optimizer selects the most efficient query plan for running the query.

Customers may observe slow query performance due to many factors. Because factors impacting a slow query are widespread, it can be challenging to identify the issues and suggest tuning options. For example, the query optimizer can produce sub-optimal results due to outdated statistics or wrong estimations. Another potential issue, which can be difficult to detect while a system is running, is customers running with sub-optimal database flag values.

### BRIEF SUMMARY

Aspects of the disclosure are directed to a query advisor module that generates recommendations for tuning a query template to improve performance. The recommendations may include suggestions for performing actions, such as rewriting the query, tuning database flags at a session level, fixing table/column statistics, running a vacuum, or planning hints or a query modification instruction, such as a structured query language (SQL) Patch.

The query advisor may provide recommendations automatically. In other examples, the query advisor may be activated manually. For example, a user may use a diagnostic analysis function, such as EXPLAIN (ANALYZE, *TUNE*), to tune a specific query. Once the query advisor is enabled, the query advisor may maintain the query plan that was analyzed along with its associated tuning recommendations. In some examples, the tuning recommendations may be identified using one or more identifiers, such as a trace-id and a span-id. Accordingly, a SQL function may be executed to retrieve the tuning recommendations.

One aspect of the disclosure provides a system comprising one or more processors configured to analyze an execution history for a particular query, automatically generate recommendations for improving query performance based on the execution history, and tune the particular query based on the recommendations.

The one or more processors may be further configured to analyze query plans for the particular query, and automatically generate the recommendations based further on the analysis of the query plans. Such analyzing may include one or more of identifying query rewrite opportunities, identifying plan opportunities, identifying execution opportunities, identifying statistics opportunities, or identifying indexes and columnarization opportunities.

In some examples, the one or more processors may be further configured to output the recommendations for display to a user. The one or more processors may be further configured to receive input from the user, the input selecting one or more recommendations to implement.

According to some examples, the analyzing is performed automatically at predetermined times. The analyzing may be performed for each query plan executed by a database management system.

In some examples, the one or more processors may be configured to track plans in a current query. In tracking plans, the one or more processors may be configured to perform initial operations on an in-memory table, synchronize, using a job scheduler, data between the in-memory table and persistent tables in accordance with a pre-defined schedule. For a new query plan, the one or more processors may be configured to insert new entries into an in-memory table, and update statistics associated with each entry when the system reaches a stable state.

According to some examples, the system may further include a plan management engine configured to track all query plans and their execution statistics, discover plans that are faster than approved plans, and provide an interface for a user to approve or reject the discovered plans. The plan management engine may include a unique plan tracker, managed plan mapping, and an optimizer. The plan management engine may store one or more tables identifying tracked plans and managed plans, wherein background processes in the plan management engine synchronize the tracked plans with the unique plan tracker, load managed plans on startup to the managed plan mapping, and steer managed plans to the optimizer.

Another aspect of the disclosure provides a computer-implemented method comprising analyzing, with one or more processors, an execution history for a particular query, automatically generating, with the one or more processors, recommendations for improving query performance based on the execution history, and tuning, with the one or more processors, the particular query based on the recommendations. The method may further include analyzing query plans for the particular query, and automatically generating the recommendations based further on the analysis of the query plans. The analyzing may include one or more of identifying query rewrite opportunities, identifying plan opportunities, identifying execution opportunities, identifying statistics opportunities, or identifying indexes and columnarization opportunities. The analyzing may be performed automatically at predetermined times.

The method may further include tracking plans in a current query, the tracking comprising performing initial operations on an in-memory table, and synchronizing, using a job scheduler, data between the in-memory table and persistent tables in accordance with a pre-defined schedule. The method may further include tracking all query plans and their execution statistics, discovering plans that are faster than approved plans, and providing an interface for a user to approve or reject the discovered plans.

Yet another aspect of the disclosure provides a non-transitory computer-readable medium storing instructions executable by one or more processors for performing a method, comprising analyzing an execution history for a particular query, automatically generating recommendations for improving query performance based on the execution history, and tuning the particular query based on the recommendations.

### BRIEF DESCRIPTION OF THE DRAWINGS

FIG. 1 is a flowchart of an example process of tuning a query, according to aspects of the disclosure.
FIG. 2 is a flowchart of an example process of generating recommendations for improving query performance, according to aspects of the disclosure.
FIG. 3 is a block diagram of an example database management system (DBMS) according to aspects of the disclosure.
FIG. 4 is a block diagram of an example columnar cache with cached data.
Fig. 5 illustrates an example architecture of the plan management engine, according to aspects of the disclosure.
Fig. 6 illustrates an example workflow, according to aspects of the disclosure.
Figs. 7-10 illustrate examples of verifying the correctness of plan steering, according to aspects of the disclosure.
Fig. 11 illustrates an example DBMS instance with plan management extension, according to aspects of the disclosure.
Fig. 12 illustrates an example DBMS instance at plan retrieval, according to aspects of the disclosure.
Fig. 13 illustrates an example of plan synchronization, according to aspects of the disclosure.
Fig. 14 illustrates an example of data integrity during startup.
Figs. 15-16 illustrates an example of generating a plan identifier.
FIG. 17 is a block diagram of an example computing environment implementing the database management system, according to aspects of the disclosure.

### DETAILED DESCRIPTION

### Overview

Aspects of the disclosure are directed to a query advisor that offers advice to tune a query template. The query advisor may be, for example, a database management system extension. It analyzes the plans and execution history of a query template. The tuning advice could include query rewrite, tuning database flags at session level, fixing table/column statistics, running a vacuum, plan hints or a query modification instruction, such as a SQL Patch.

The query advisor may provide tuning advice automatically, such as on a schedule or in response to receipt of a query plan from a user. A user may also manually engage the query advisor, such as by executing a diagnostic analysis function such as EXPLAIN (ANALYZE, TUNE) to tune a specific query. Once the query advisor is enabled, the query advisor may maintain query plans sampled by a database insight and advisory service, along with its associated tuning advice. The query advisor may expose a SQL function to retrieve the tuning advice given a trace identifier (trace-id) and a span identifier (span-id).

The tuning advice generated by the query advisor may be in the form of a list of issues, a list of recommended actions, etc. In some examples, the tuning advice may indicate an estimated increase in speed for each recommended action if the action is implemented, or an estimated increase in speed if a combination of two or more recommended actions are implemented.

An example of the tuning advice may include determining that a sequential scan operation on a first lineitem has too many dead tuples, and a sequential scan operation on a second lineitem has high cardinality estimation errors. The advice may be to perform a database maintenance operation, such as a vacuum operation, on the first lineitem and to perform an analyze operation on the second lineitem. For example :
a. Issue-1: SeqScan on \"public\".\"lineitem\" with alias lineitem5 has too many (100000) dead tuples and last vacuum was 60 days ago.
b. Issue-2: SeqScan on \"public\".\"lineitem\" with alias lineitem3 has high cardinality estimation errors (10.00x over estimation) and last analyze was 30 days ago.
c. Advice-1: VACUUM \"public\".\"lineitem\";
d. Advice-2: ANALYZE \"public\".\"lineitem\";

In addition to suggesting tuning advice for the query, the query advisor may provide explanations for the suggestions. Example tuning options suggested by the query advisor may include showing the most time consuming operators in the plan, identifying table scans with many dead tuples and suggesting vacuum, identifying table scans with high cardinality estimation errors and suggesting analyze, identifying table scans with potential higher parallelism, identifying gather nodes with fewer workers than planned, suggesting increasing a maximum number of parallel workers per gather if the number of concurrent sessions is low, suggesting decreasing the maximum number of parallel workers per gather, identifying hash nodes with high spilling to disk and suggesting increase of a hash memory multiplier, identifying sort nodes spilling to disk and suggesting increasing work memory, etc. While these are a few examples of tuning options, this is not an exhaustive list and numerous other tuning options are possible.

The query advisor may be implemented along with other database management tools, such as plan management and plan repository. The plan management tool may track all query plans and their execution statistics to offer insights into query plan performance. The plan repository tool may track the plans used in a current query.

### Example Methods

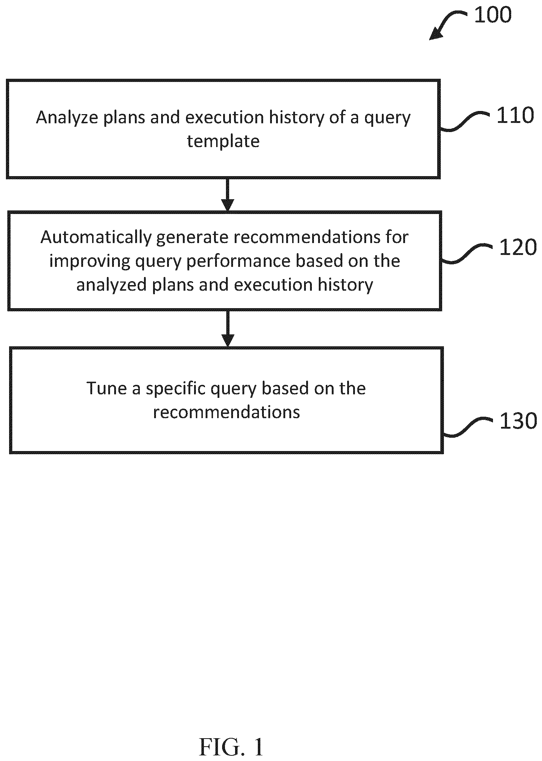

FIG. 1 is a flowchart of an example process 100 of tuning a query, according to aspects of the disclosure.

In block 110, the query advisor analyzes plans and execution history of a query template.

In block 120, the query advisor generates recommendations for improving query performance based on the analyzed plans and execution history. For example, the query advisor may identify query rewrite opportunities, plan opportunities, execution opportunities, statistics opportunities, and/or indexes and columnarization opportunities. In some examples, the tuning recommendations may be stored, such as on a local disk.

In block 130, the query advisor tunes a specific query based on the recommendations. For example, stored tuning recommendations can be retrieved, such as by an SQL function, remote procedure call (RPC) or any other type of function or call for retrieving data. Tuning the specific query may include adjusting one or more aspects of the query to implement one or more of the generated recommendations. For example, the query advisor may rewrite all or portions of the query, etc. As another example, query plan related flags may be changed to affect the plan generation. As another example, the query advisor may notice a mismatch between row estimates and row counts during execution, and may suggest to a user to update freshness of table statistics before running the query again. The tuning may be performed automatically, such as in response to generation of the recommendations. In other examples, tuning may be triggered by one or more user actions or instructions.

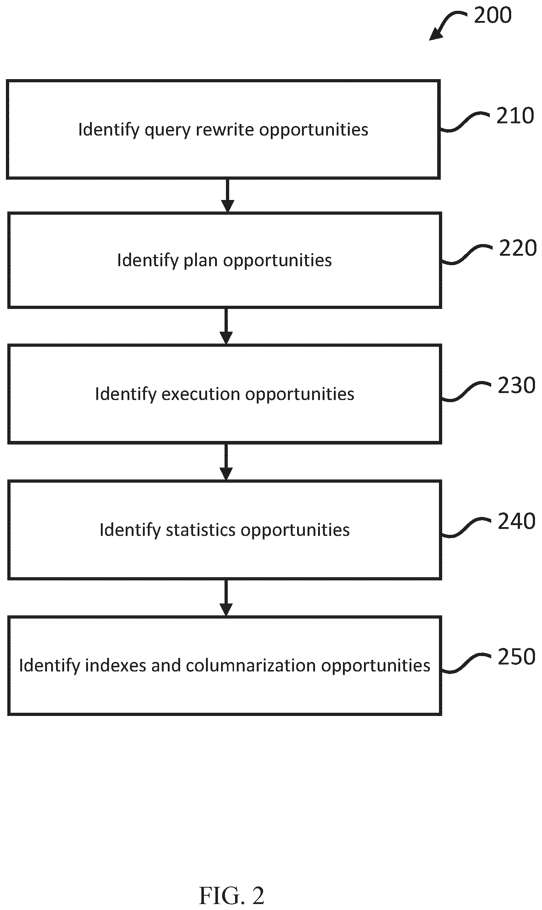

FIG. 2 is a flowchart of an example process of generating recommendations for improving query performance, according to aspects of the disclosure.

In block 210, the query advisor identifies query rewrite opportunities. Rewrite opportunities may include suggestions for a rewritten form of a query or subquery. For example, a rewritten form of a query may remove subqueries or otherwise improve the query for faster or more efficient execution.

In block 220, the query advisor identifies plan opportunities. Plan opportunities may include opportunities to select a different plan. For example, the query advisor may provide query hints as to whether a better query plan exists.

In block 230, the query advisor identifies execution opportunities. Examples of execution opportunities may include opportunities to improve execution behavior other than through plan choice, such as through flags, etc.

In block 240, the query advisor identifies statistics opportunities. Statistics opportunities may include determining that statistics are stale and suggesting updating statistics to improve execution of the query. They may also include suggestions to manually generate statistics that could help the next planning phase.

In block 250, the query advisor identifies indexes and columnarization opportunities. Index opportunities may include suggesting a new index to create such that the next plan can use a better index scan. Columnarization opportunities may include advising users to manually populate columns into a column store to improve a query.

### Example Systems

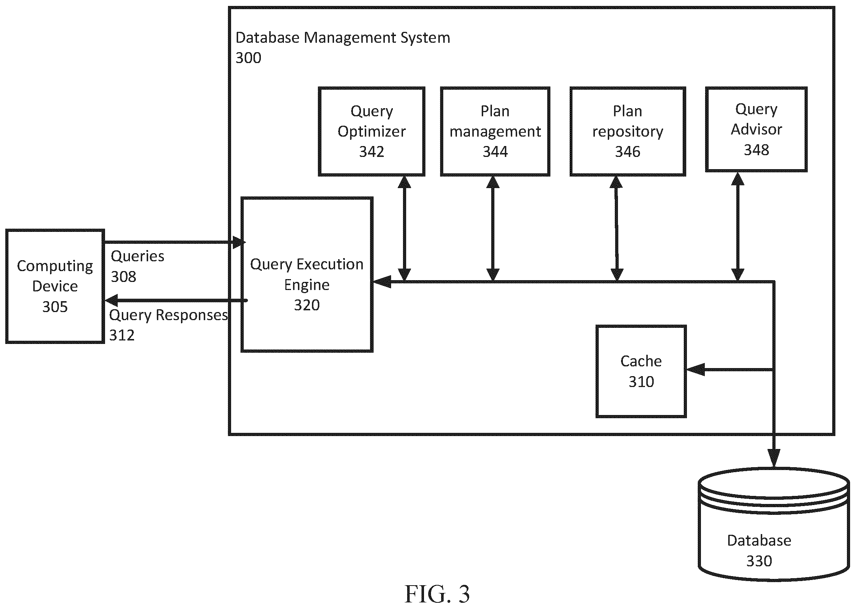

FIG. 3 is a block diagram of an example database management system (DBMS) 300 configured to generate, analyze, and manage query execution plans. The DBMS 300 can include a query execution engine 320, a query optimizer 342, a plan management engine 344, a plan repository engine 346, and a query advisor engine 348. The DBMS 300 may be in communication with a database 330, and may further include a cache 310.

The DBMS 300 is configured to receive queries, such as queries 308 from computing device 305, and resolve queries by providing responses, such as query responses 312. A query response can include one or more rows or columns-or portions of one or more rows or columns-of one or more tables of the database 330. Before providing the query response, the DBMS 300 can optionally process the data, for example by sorting the rows of the response. Operations for processing the query response can be provided as part of a received query, and/or be part of a predetermined pipeline that the DBMS 300 is configured to execute as part of resolving a query.

The computing device 305 can be any of a variety of computing devices configured for querying a database. For example, the computing device 305 can be a personal laptop, a server, a wearable device, a sensor, etc. The computing device 305 can be user-operated and include peripherals or other components for receiving user input. In other examples, the computing device 305 is configured to automatically communicate with the DBMS 300, for example as part of an executed program by the computing device 305.

In some examples, the DBMS 300 can be a hybrid transactional and analytical processing system (HTAP). An HTAP system is a database management system configured to perform both online transaction processing (OTAP) and online analytical processing (OLAP). OTAP systems are configured to coordinate and execute transactions between communicating computing devices. Transactions are recorded and updated in a corresponding database managed by an OTAP system. OLAP systems are configured to receive and resolve queries to a database used as part of analysis of data stored in the database. OLAP and OTAP systems are separately optimized for their respective use cases, with OLAP systems generally optimized for read-only access of data, and OTAP systems optimized for read and write access of queried data.

The DBMS 300 can implement the database cache 310. In some examples, the database cache 310 is a columnar cache. Queries to OLAP systems and HTAP systems supporting OLAP may include requests for data referenced by columns of tables in the database, as opposed to references to individual rows, which is more common in OTAP.

The DBMS 300 can be configured to reference and manipulate data in row-major format, but also implement a columnar cache storing column data in column-major format. Column-major formatted data can speed up the execution of some queries, for example in systems in which columns of tables are queried more often than individual rows or records of tables.

The database 330 is a collection of tables or relations storing data along multiple dimensions. For example, a table of the database 330 can store data along rows and columns of the table. The database 330 can be implemented on storage devices, such as directed attached storage devices, including solid state drives, hard drives, flash drives, network attached storage devices, arrays of various combinations of different or the same storage devices, etc.

The query execution engine 320 is configured to receive queries 308 and generate query responses 312. The queries 308 can be part of a workload executed by the computing device 305, or some other device not shown. A workload can refer to one or more computer programs or scripts that include operations for querying the DBMS 300 for data. A workload can be automatic and on-going, or executed during pre-programmed intervals of time. In other examples, a workload is executed on-demand by the computing device 305, for example in response to user input to the device 305.

A query to the DBMS 300 can include data specifying columns of data to be retrieved from the DBMS 300. The specified data may be stored in the database cache 310 or in the database 330 at the time of execution. The query execution engine 320 is configured to retrieve the queried data specified in a given query and return the data as part of a query response.

The DBMS 300, as part of resolving the query, is configured to generate a query execution plan. The DBMS 300 can include a query optimizer 342, or in some examples the DBMS 300 can communicate with a query optimizer that is external to the DBMS 300. The query optimizer 342 can generate a query execution plan according to any of a variety of different processes. As part of generating the query execution plan, the query optimizer 342 can parse a received query and select corresponding query operations to execute according to the plan, based on a number of predetermined criteria. The predetermined criteria can be, for example, based on efficient use of compute or storage resources, number of operations to perform, total time to execute the query, user input specifying certain types of operations to perform, etc.

The query execution plan can be represented as a collection of connected plan nodes, for example as part of a graph or tree. Each plan node can represent operations that are performed by the query execution engine 320 as part of resolving the query. For example, different plan nodes can correspond to different types of scanning operations, such as sequential scan or index scan. Other plan nodes can connect plan nodes for scanning operations, such as plan nodes representing join operations for combining the results of different executed scans in response to the query. The query execution plan can show how various tables holding some or all of the queried data will be scanned to retrieve the queried data, as well as how the results of the scan operations are to be combined to generate a query response.

The query optimizer 342 receives and parses a query to generate a query execution plan. The query execution plan represents query operations and an order in which the query operations are to be performed by the DBMS 300 to execute the query.

A query operation refers to an action performed by the query execution engine 120 as part of executing or resolving the received query. A query operation can include reading or writing data from and to memory, performing arithmetic or logic calculations, performing a respective process for sorting, hashing, joining, and scanning data, etc. The query execution plan can be a directed graph, such as a tree, of nodes representing different operations to be performed by the DBMS as part of executing the query. The query execution plan can also be represented as an ordered list or array of operations, based on the order in which the operations of the plan must be executed to correctly execute the received and parsed query.

Query responses 312 generated by the query execution engine 120 are returned to the computing device 305. In some examples, query responses 312 can be returned to another destination computing device (not shown) that can be specified as a destination by the computing device 305. The computing device 305 can proceed to process the query responses 312 as part of a downstream process, which may include subsequent queries to the DBMS 300 as part of the same or a different workload.

Query optimizer 342 may be configured to process plans to determine performance metrics corresponding to the execution of those plans, when certain subsets of column data are cached in the database cache 310. For example, performance metrics can be measured in terms of clock time to resolve the query, or in the number of processing cycles or operations needed to resolve the query. As part of generating the query execution plan, the query optimizer 342 can parse a received query and select corresponding query operations to execute according to the plan, based on a number of predetermined criteria. The predetermined criteria can be, for example, based on efficient use of compute or storage resources, number of operations to perform, total time to execute the query, user input specifying certain types of operations to perform, etc.

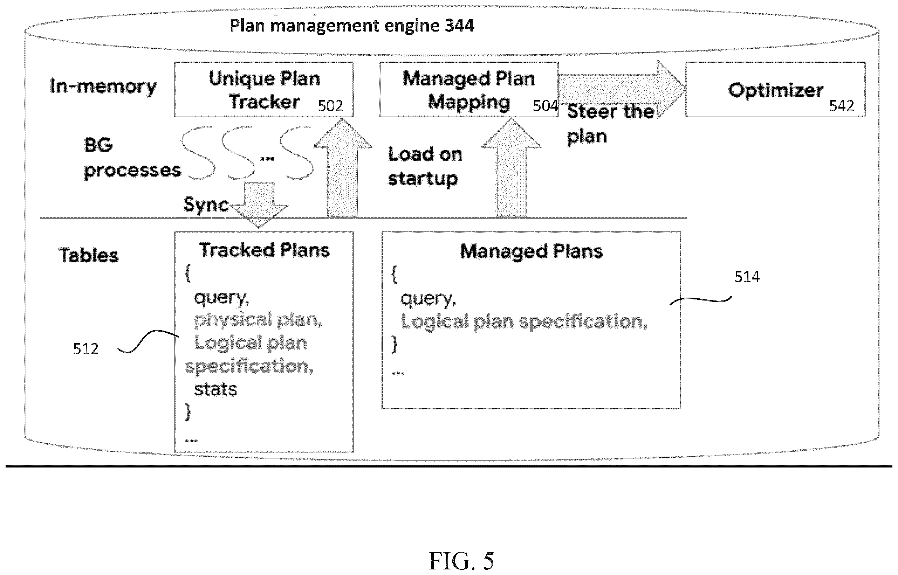

Plan management engine 344 is configured to monitor the workload and save the monitored plans into the plan repository. Plan management engine 344 is described further below, such as in connection with Fig. 5.

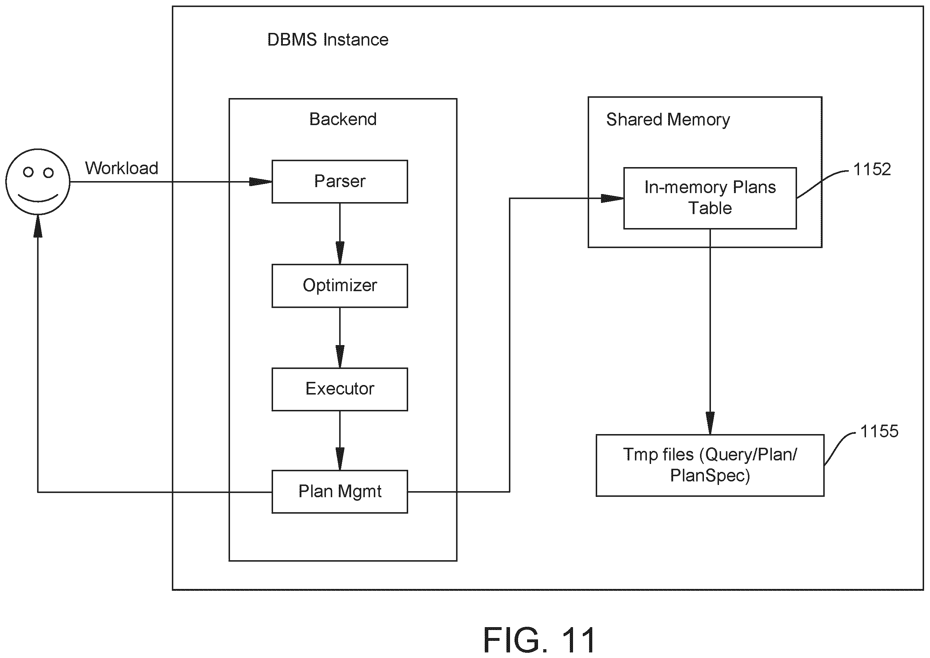

Plan repository 346 is configured to store historical plans and their execution statistics. The plan repository 346 is configured to help persist query plans used for execution. The plan repository 346 may offer an application programming interface (API) for users to view historical plans. The plan repository 346 feature is described further below, such as in connection with Figs. 11-15.

Query advisor 348 is configured to analyze plans and execution history of a query template, generates recommendations for improving query performance based on the analyzed plans and execution history, and tunes a specific query based on the recommendations. In generating the recommendations, the query advisor 348 may identify various opportunities for improving the execution speed of a query plan. Such opportunities may include query rewrite opportunities, plan opportunities, execution opportunities, statistics opportunities, indexes and columnarization opportunities, etc.

The DBMS 300 can communicate data between the computing device 305 and/or another computing device (not shown), using an interface, such as a graphic user interface, displayed on a display of the computing device 305. The interface can include a number of user-interactable elements, such as buttons, toggles, sliders, checkboxes, etc., for modifying the behavior of the DBMS 300 and/or displaying certain types of information, described presently. In other examples, the interface can include an API exposing the DBMS 300 for modifying different parameters related to the functionality of the DBMS 300, such as cache configuration, according to calls to the API.

The interface can generate various visualizations of the data queried as part of a workload, and/or the columns of data populated in the database cache 310. Each column populated in the database cache 310 can correspond to a respective user-interactable element on the interface and for toggling the inclusion or exclusion of the column in the database cache 310. The interface can also provide the performance benefit of the current cache configuration, and/or individual performance metrics used to measure the benefit for each column set as part of a cache configuration. In some examples, performance metrics are generated and stored only while the cache population engine is generating a cache configuration.

In yet further examples, the interface can be configured to receive input for causing the cache population engine to generate cache configurations according to different database cache sizes. In some examples, a computing device 305 accessing the system DBMS 300 through the interface may only be allocated a subset of the total available database cache memory available on the DBMS 300. In some examples, the DBMS 300 can generate cache configurations specifying which columns or column sets would be populated in the database cache 310, without actually populating the database cache 310. These various cache configurations can be compared and chosen, for example automatically by the cache population engine or through user input to the interface between the computing device 305 and the DBMS 300.

In yet further examples, the user interface can present the queries and related information from a workload. The user interface can receive input for specifying which queries should be sampled by the cache population engine, instead of purely random sampling.

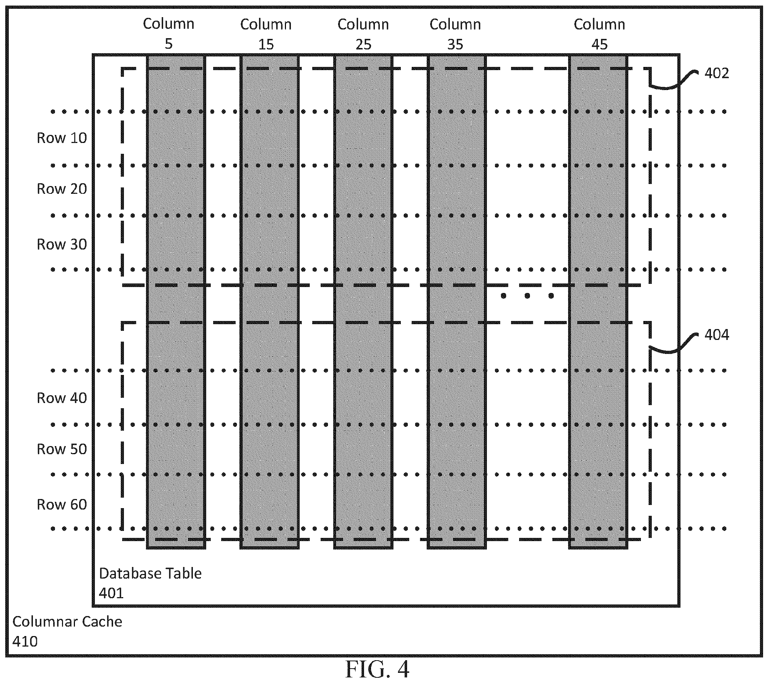

FIG. 4 is a block diagram of an example columnar cache 410 with cached data. In FIG. 4, the columnar cache 410 is shown as caching portions of a database table 401. Columns 5, 15, 25, 35, 45 in the columnar cache 410 can be referenced using a respective columnar unit index and a row index. A column in a columnar unit can be the entire column from a database table, or a portion of a column in the database table.

Each columnar unit 402, 404 has a respective index. Within each columnar unit, each row of the columnar unit has a respective row index. For example, columnar unit 402 and columnar unit 404 have respective columnar unit indices, for example 402 and 404. Each row, such as row 10, row 20, and row 30, of columnar unit 402 can be referenced according to a respective row index. Similarly, rows 40, 50, and 60 can be referenced according to a respective row index. The size of each columnar unit can be measured in blocks of data. The number of blocks for a columnar unit can vary from implementation-to-implementation, for example 4096 blocks each.

A valid block in the columnar cache 410 is up to date with corresponding data in a base table for the block in the cache 310. When the corresponding data in the base table is updated, for example overwritten or deleted, the block in the columnar cache 410 representing the updated data is invalid or has become invalidated. When a block is invalidated, the DBMS must perform a row-store operation to read the updated contents of the base table, instead of using a more computationally efficient operation to retrieve the data from the cache 310. The DBMS 300 can implement any of a variety of approaches for maintaining cache coherence between the cache and database tables, and blocks of memory can be flagged as "invalid" or "valid" bits to identify the blocks as valid or invalid.

The columnar cache 410 can include any of a variety of different types of memory devices used for caching data. For example, the columnar cache can be implemented in main memory, such as RAM or DRAM. In addition, or alternatively, the columnar cache 210 can be implemented in persistent storage, such as on a solid-state drive or on a hard drive.

### Query Advisor

The query advisor engine 348 may output recommendations for tuning a query. The output may identify issues causing slower execution times for the query, and recommendations for resolving the issues. The following provides various examples of issues potentially identified, framed as opportunities for improved performance:

### Rewrite Opportunities

| Opportunity | Reason |
|---|---|
| Add predicate t1.c1=2 | CTE does not push down predicate |

### Query Plan Opportunities

| Opportunity | Reason |
|---|---|
| ANALYZE | Bad scan row count and analyze hasn't ran for a while. |
| CREATE INDEX | Up to 10x faster execution time. |

### Execution Opportunities

| Opportunity | Reason |
|---|---|
| VACUUM | Too many dead tuples |

### Columnar Engine Opportunities

| Opportunity | Reason |
|---|---|
| Columnarize columns a,b,c | 50x faster execution time |

### Query Plan Summary

### Per node estimation error

| Node | Planned row | Actual row count | Error | Last analyze |
|---|---|---|---|---|
| | count | | | time |
| Index Scan on t1 | 1 | 10000 | -10000x | 7 days ago |
| Seq scan on t2 | 100000 | 1 | +100000x | never |
| Hash Join | 200 | 400 | -2x | N/A |

### Per alias execution stats

| Table | Alias | Time | % of Total |
|---|---|---|---|
| T1 | t1 | 40 ms | 10% |
| t2 | t2 | 20 ms | 5% |

### Per node execution stats

| Node | Time | % of Total |
|---|---|---|
| Index Scan | 50 ms | 10% |
| Hash Join | 30 ms | 5% |

### Per index execution stats

| Index name | Alias | Time | % of Total |
|---|---|---|---|
| idx_t1_a | t1 | 40 ms | 10% |

The query advisor may further provide advice for resolving the issues. A few examples of such advice follows:

### Query rewrite opportunities

| Issue / Opportunity | Advice |
|---|---|
| Filter predicates are NOT pushed down into CTEs. | WITH t1 (select * from t where a > 10) |

| | |
|---|---|
| Example: | select * from t1 where a > 10; |
| WITH t1 (select * from t) | |
| select * from t1 where a > 10; | |
| Equivalent class filter only supports a=b. | Add additional derived expressions. add AND b.col = ANY(1,2,3). [ref1, ref2] |
| Example: | |
| a.cof=b.col AND a.col = ANY(1,2,3) | |

| | |
|---|---|
| NOT IN | NOT EXISTS b/267S84047 |
| Derived tables | Push down predicate to derived tables |
| Repeatedly rescan subquery results | Rewrite to use joins. Very complex (TODO) |
| Parallel-safe functions are marked as parallel unsafe. | UPDATE function Parallel_safe. |

### CTE

| | Original | Suggested rewrite |
|---|---|---|
| Execution time | 1 second | 70 ms (14x faster) |

| | | |
|---|---|---|
| Schema: 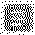 Query Advisor **Original query:** WITH cte1 AS (SELECT c1, c2 FROM t1 GROUP BY c1, c2), cte2 AS (SELECT t2.c1, SUM(t2.c2) AS sumb FROM cte1, t2 WHERE cte1.c1 = t2.c1 GROUP BY t2.c1), base AS (SELECT t2.c1, t2.c2 FROM cte1 JOIN t2 ON cte1.c1 = t2.c1) SELECT base.c1 FROM base JOIN cte2 tt2 ON base.c1 = tt2.c1 WHERE base.c1 = 3; | | |

### Rewrite query:

WITH cte1 AS
(SELECT c1, c2 FROM t1 WHERE c1=3 GROUP BY c1, c2),
cte2 AS
(SELECT t2.c1, SUM(t2.c2) AS sumb FROM cte1, t2 WHERE cte1.c1 = t2.c1 GROUP BY t2.c1), base AS
(SELECT t2.c1, t2.c2 FROM cte1 JOIN t2 ON cte1.c1 = t2.c1)
SELECT base.c1 FROM base JOIN cte2 tt2 ON base.c1 = tt2.c1 WHERE base.c1 = 3;

### Equivalent class filter

| | Original | Suggested rewrite |
|---|---|---|
| Execution time | 150 ms | 50 ms (3x faster) |

### Original query:

SELECT * FROM t1 JOIN t2 ON t1.c1 = t2.c1 WHERE t2.c1 < 50000;

### Rewrite query:

SELECT * FROM t1 JOIN t2 ON t1.c1 = t2.c1 WHERE t2.c1 < 50000 AND t1.c1 < 50000;

### NOT IN

| | Original | Suggested rewrite |
|---|---|---|
| Execution time | Forever | 1 second |

### Original query:

SELECT * FROM t1 WHERE c2 NOT IN (SELECT c1 FROM t2);

### Rewrite query:

SELECT * FROM t1 WHERE NOT EXISTS (SELECT c1 FROM t2 WHERE t1.c2=t2.c1);

### Derived Table

| | Original | Suggested rewrite |
|---|---|---|
| Execution time | 300 ms | 200 ms |

### Original query:

select t1.c1
from t1, (select t1.c2, t2.c2 from t1, t2 where t1.c1 = t2.c1) dt1(b, c)
where t1.c2 = dt1.b and dt1.c <50000;

### Rewrite query:

select t1.c1
from t1, (select t1.c2, t2.c2 from t1, t2 where t1.c1 = t2.c1 AND t1.c2<50000) dt1(b, c)
where t1.c2 = dt1.b and dt1.c <50000;

### Plan Management

A plan management extension, such as the plan management engine 344, provides plan stability and faster query performance through better plans. The plan management engine 344 may track all query plans and their execution statistics to offer insights into query plan performance. A customer may approve one or more query plans to a query template, such that future execution of the query may be limited to the approved plans. The plan management engine 344 is configured to discover faster plans that the standard optimizer does not consider. The customer can then decide to approve these plans.

According to some examples, the plan management extension may provide an interface for customers to view managed queries and plans, approve or reject plans, or the like. According to some examples, the interface may allow the customer to explore plans that are generated by DBMS 300 but that would not typically be selected by DBMS 300. The customer can select such a plan for execution. In some cases, a selected plan may become slower when the data changes. The customer can run a function to re-evaluate all historical plans and approve the fastest plan that is at least a predetermined amount faster, wherein the predetermined amount may be defined by the customer or by an existing setting in the plan management extension.

Fig. 5 illustrates an example architecture of the plan management engine 344. In the illustrated example, the plan management engine includes a unique plan tracker 502, managed plan mapping 504, and an optimizer 542. For each query submitted, the database manager may choose different query plans. The unique plan tracker 502 is configured to track different plans in memory and storage. The managed plan mapping 504 is configured to find which plans were approved and steer the database optimizer 542. The optimizer 542 is configured to convert the query into a query plan that can be executed later. Any or all of these components may have added logic for steering. Tables stored in the plan management engine 344 may identify tracked plans 512 and managed plans 514. Background processes in the plan management engine 344 may synchronize the tracked plans 512 with the unique plan tracker 502. Managed plans 514 may be loaded on startup to the managed plan mapping 504 and steered to the optimizer 542.

In operation, a logical plan specification is constructed and the optimizer 542 is steered to follow the specification. On each operator, after the optimizer 542 generates a path, the path may be kept if it is specified in the specification, and otherwise may be discarded. If the produced plan is the same as the specified one, the plan may be executed. Otherwise, the optimizer may generate a new plan.

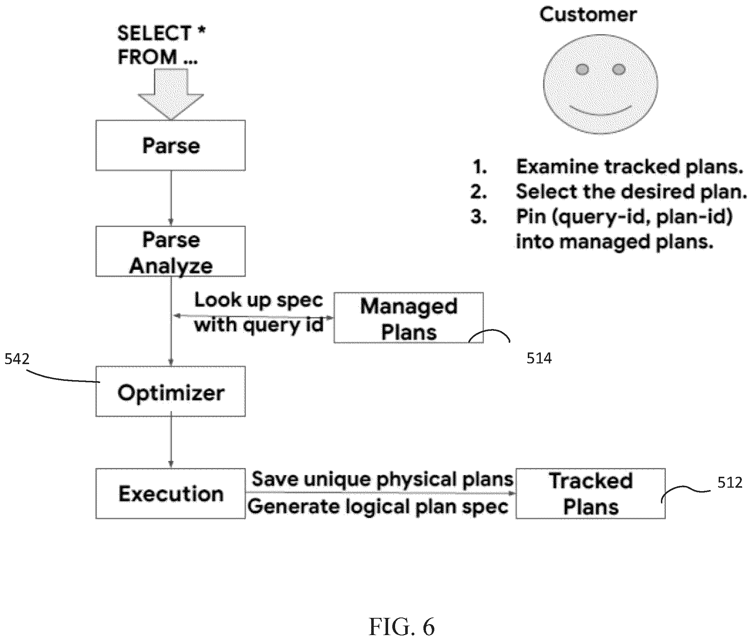

Fig. 6 illustrates an example workflow. A customer may examine tracked plans, select a desired plan, approve the plan, and store the approved plan into the set of managed plans 514. For example, the desired plan can be identified by a query identifier (query-id) and a plan identifier (plan-id). In reading a selected plan, a specification may be accessed from the managed plans 514 using a query identifier and provided to the optimizer 542. The optimizer 542 is configured to execute the plan and save unique physical plans to the tracked plans 512. The optimizer 542 may generate a logical plan specification. If a look-up operation for the desired plan fails to produce a managed plan, the optimizer may be called directly to produce the default plan.

A relation optimization information structure (RelOptInfo) is a data structure reference that corresponds to an operator. It maintains access methods, such as the path list and partial path list, that contain all candidate access methods to execute the operator. Each specification corresponds to one RelOptInfo reference. During query planning, a specification is connected to its corresponding RelOptInfo reference, keeping the path specified in the specification and discarding paths that are not needed.

When planning a new query, the optimizer 542 uses a plan specification to generate a physical plan. The optimizer 542 sets up for recursive handling of subqueries. In doing so, it selects a plan and connects to the subquery specification. If possible, the optimizer 542 identifies sublinks and subqueries from a data source list, such as a rangetable. The optimizer executes a grouping planner module, which handles unions, intersections, exceptions, grouping, aggregates, and other constraints. The optimizer 542 may then execute a query planning module, which identifies relationships within the specification, performs grouping and window functions, handles sorting and limits, etc. In executing the query planning module for a specified path, the optimizer may connect to the relevant specification block in the subquery specification. Unspecified paths may be discarded. Heuristics that prune out the specified path may be bypassed. Each path that is traversed may be added to a path tree, and a finished path tree may be converted to a plan tree by connecting each path.

The first time encountering a new plan generated by the optimizer, the optimizer sets up for recursive handling of subqueries. A subquery planner may pull up subqueries from the data source list or rangetable. Grouping planner may handle unions, intersections, grouping, aggregates, ordering, distinctions, limitations, etc. The finished path tree is converted to a plan tree. The final path tree is traversed and each path is connected to its RelOptInfo reference.

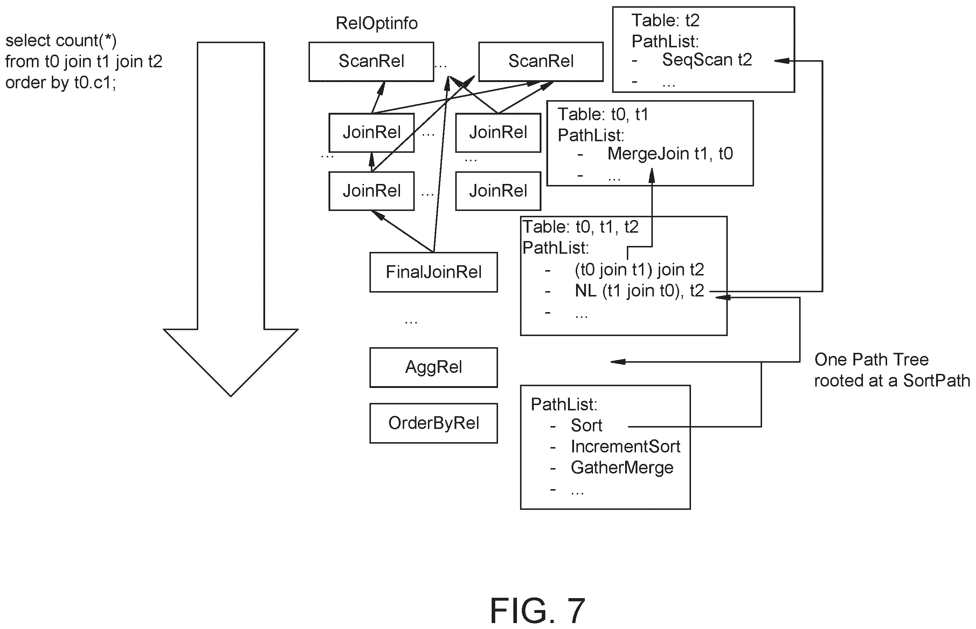

Figs. 7-10 illustrate examples of verifying the correctness of plan steering. Steering a plan is successful when the new plan identifier matches the specified plan identifier, and the path tree for every operator has only one unique fingerprint. If the new plan identifier is different from the one saved in the specification, it means that the new plan is completely different, and therefore the steering failed. When the plan identifiers are the same, continued verification that steering only produces one unique plan may be performed. This prevents the scenario where steering produces more than one plan and it happens that the final plan has the cheapest cost. The continued verification may include recursively verifying that the candidate path trees rooted at each operator are unique.

As shown in Fig. 7, in a hierarchical structure of a query plan tree, at different levels a different path can be provided for a scan, join, etc. For plan steering, if a user approved multiple plans, a logical plan specification may be used to prune the plan tree, resulting in one selected plan. The hierarchy is an example of how the optimizer operates. At a top level, a scan relation function (ScanRel) may generate all scan paths. After all optional paths are generated, a next level of the hierarchy includes a join relation function (JoinRel) to generate various candidate paths to join. Path steering is performed to select an optimal path of the various generated options.

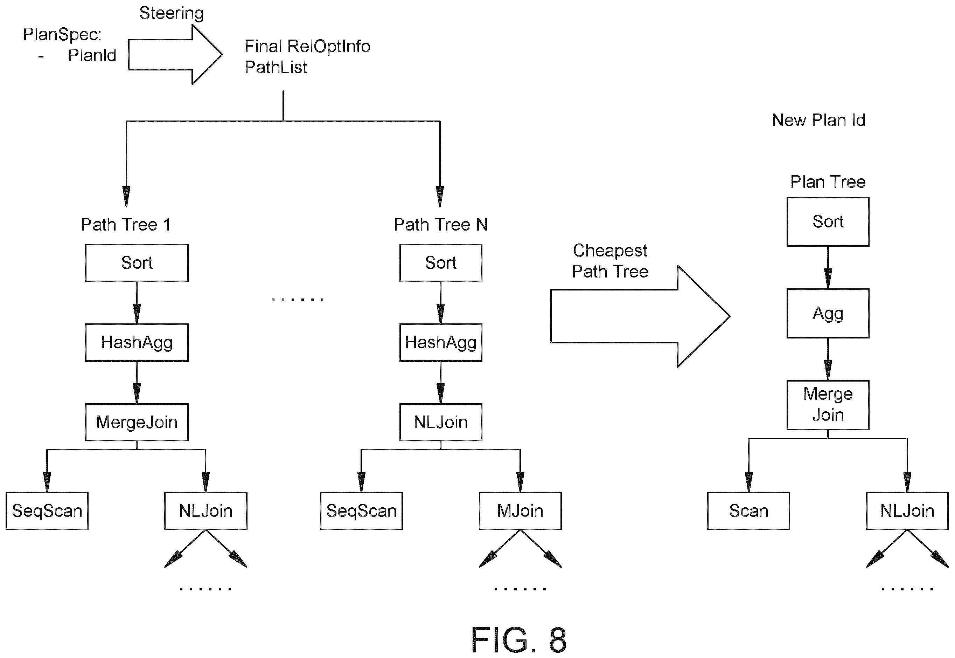

As shown in Fig. 8, plan steering is used to select a path tree from various candidates. For example, the selected path tree may have a lowest cost in terms of computational efficiency. The selected path tree may be assigned a new plan identifier.

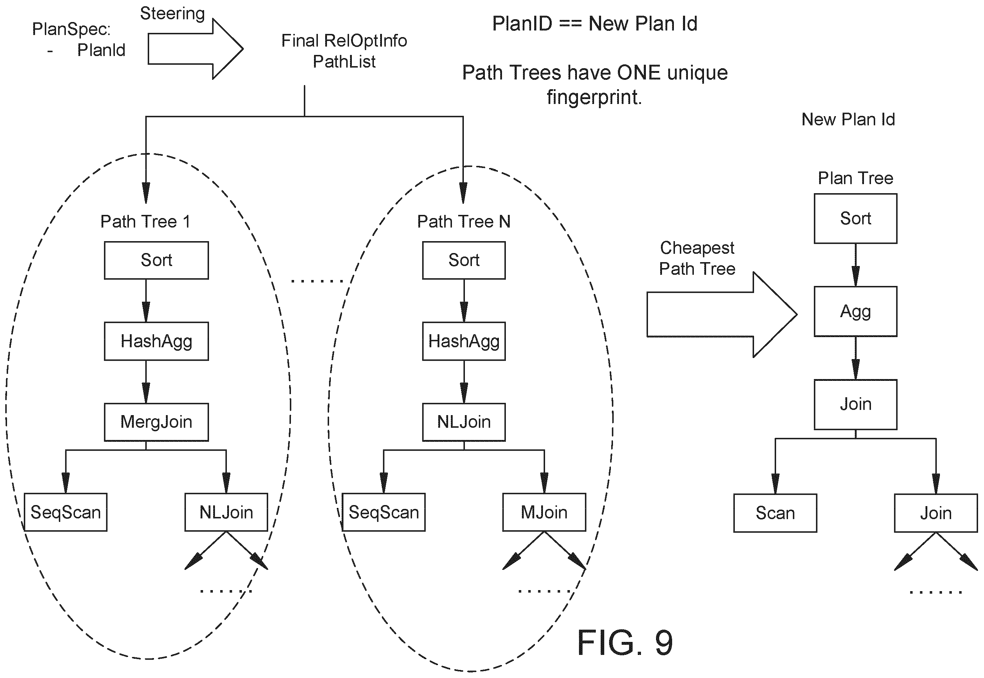

As shown in Fig. 9, each of the candidate path trees may have a unique fingerprint. After plan steering, it may be confirmed that the generated plan is the same as the original plan specification (PlanSpec). This may be performed by comparing fingerprints at each level of the plan tree to confirm they are the same as the PlanSpec.

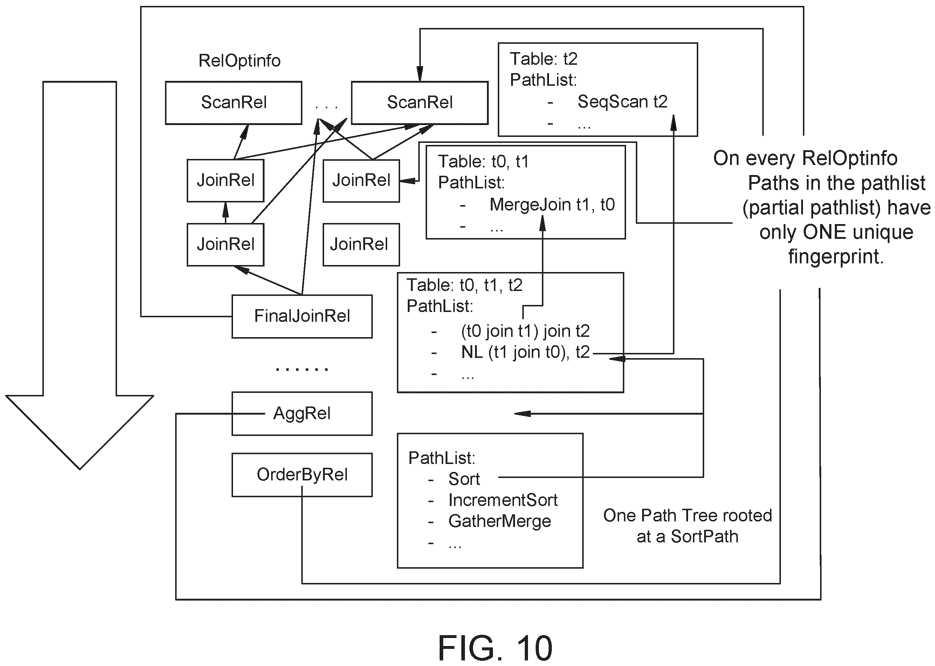

As shown in Fig. 10, on each level of the hierarchy, it is verified that the steering was verified correctly based on unique fingerprints. If a fingerprint is not in the original PlanSpec, it may be considered a plan failure.

### Plan Repository

In some examples, the plan management extension may include a plan repository feature. In other examples, the plan repository may be a separate tool accessible by the plan management extension. In the event that users encounter the need to scrutinize query plans within their workload as a result of concerns such as plan instability, such users may have the option to activate this feature. Once the feature is on, it will start tracking the plans used in the current query. To mitigate the impact on performance, all operations are initially performed on the in-memory table. Subsequently, the job scheduler facilitates the synchronization of data between the in-memory and persistent tables in accordance with a pre-defined schedule. For example, the schedule may be on the order of seconds, minutes, hours, etc. In some examples, the user can change the default schedule. In the case of new plans, the system will insert new entries into the table. When the system has reached a stable state, only the statistics associated with each entry will be updated, thus minimizing the potential for contention. Stable state refers to a state in which all or most of the plans have been reviewed by the query advisor, as opposed to including numerous newly generated plans.

Taking into account the workload and desired performance, users are empowered to exercise precise control over the maximum number of plans to be tracked, as well as the data synchronization schedule. This level of granularity enables the effective management of resource allocation, ensuring optimal support for the workload. Following the execution of the workload over a period of time, users have the ability to check the plan view in order to observe the various plans used for the specific query, thereby facilitating the process of debugging performance-related concerns. Furthermore, they can choose to use the Plan Management feature to approve specific plans for a query for stabilization, or to reject specific plans.

Example in-memory table schema:

| | |
|---|---|
| db_id | Database object identifier (OID). |
| user_id | OID of the user who issued the query which used the corresponding plan. |
| logical_query_id | Hash of the normalized query statement. |
| plan_id | Hash of the plan tree. |
| query_id | Hash of the parse tree, calculated by the database management system. Not stable across versions because of the usage of OID. |
| query_text_file_offset | Normalized query statement without the binding values. |
| plan_text_file_offset | Explain output of the query plan. |
| total_execution_time | Total execution time in ms. |
| num_execution | Number of times the plan has been used. |
| created_time | The time planner generated this plan. |
| last_used | The last time planner used this plan. |
| last synced | The last time this plan was synchronized between in-memory table and persistent table. |

Fig. 11 illustrates an example DBMS instance. When the track plan feature is enabled, the plan management extension uses the execution completion hook to process the data. Based on the information from the query descriptor, it looks up the in-memory hash table 1152, and if the entry already exists it updates the statistics using the instrumentation data. When the query descriptor has a new plan, such as when a lookup fails, it takes the exclusive lock on the table, appends the query/plan/plan_spec text to temporary file, then creates the new entry which contains file offset pointers.

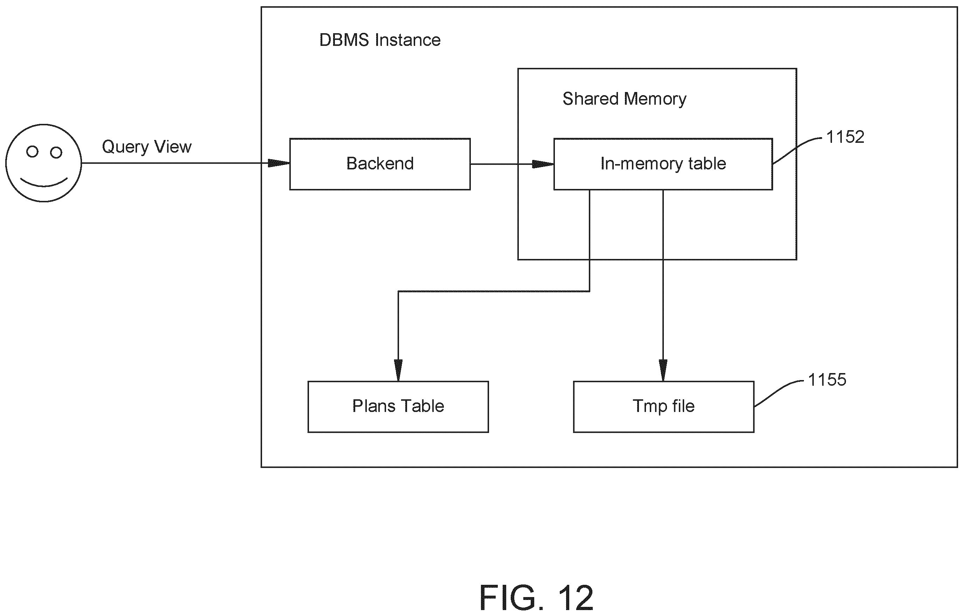

Fig. 12 illustrates an example DBMS instance at plan retrieval. When a user queries the plan management engine 344, the backend iterates through the in-memory table 1152. It applies filters and collects entries belonging to the current database and issued by the current user. For the text field like query/plan/plan_spec, it tries to find the data from the persistent table first if the last_sync_time is not empty. If not found, it will retrieve from the temporary file 1155. Content is read based on the file offset pointer instead of reading the whole file. It reads the header first to get the length, then reads the content after that.

Sometimes, even if the last_sync_time is not empty, it may not be possible to read the data from the persistent table because of transaction visibility. The in-memory table 1152 has the most recent data, if the retrieval backend has an older transaction identifier than the data synchronization job's transaction identifier, it would not see the data. The purpose is to periodically synchronize in-memory data to the persistent table, which helps with data integrity during instance load time and restart.

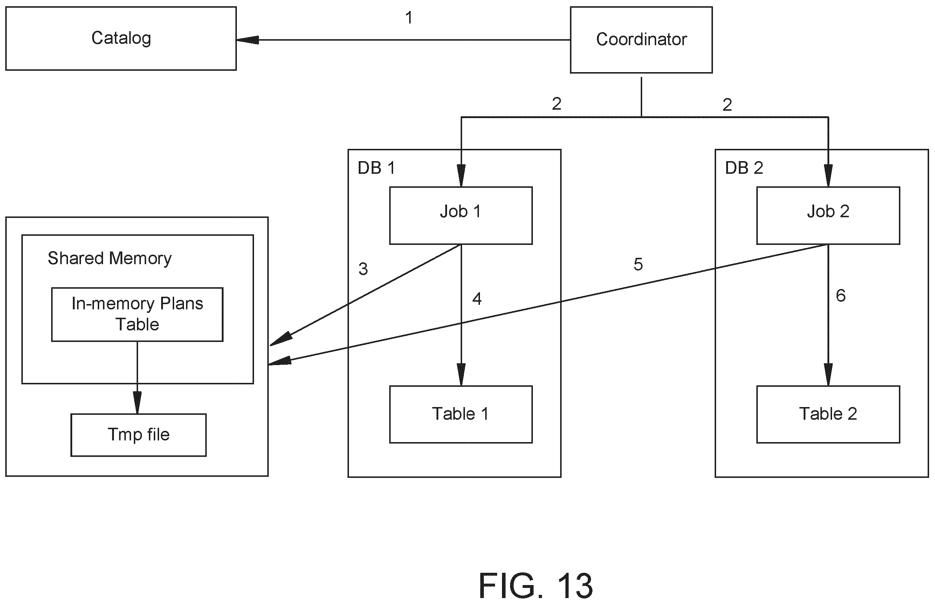

Fig. 13 illustrates an example of plan synchronization. The job scheduler framework may have a leader-follower structure. First, the leader/coordinator process reads the catalog table to collect all database IDs. It creates a corresponding number of workers, each one connects to a database. If the database has the plan repository feature enabled, it goes through the in-memory table and finds entries belonging to the current database. To determine if each entry needs to be synced, it has criteria:
1. last_sync_time =0: This means the plan has not been synchronized before.
2. last_sync_time < last_used_time: This means the statistics have been updated.

Based on the above two criteria, relevant entries are identified. Additionally, the maximum number of entries to be synchronized at a time is taken into consideration. Subsequently, a batch insert or batch update operation is performed on the table.

Upon the completion of all assigned tasks by the workforce, the coordinator will update the status of the job to signify its successful conclusion. Additionally, comprehensive logs have been incorporated to provide insights into the duration of the process and the number of inserted or updated entries, thereby facilitating debugging.

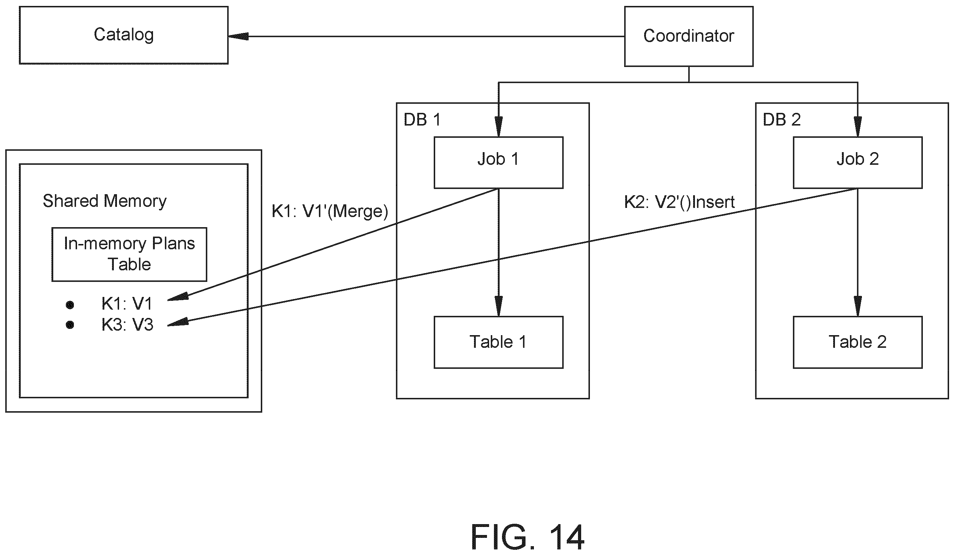

Fig. 14 illustrates an example of data integrity during startup. During startup, everything is loaded from the table to the memory, but without blocking the user from using the database. For example, the coordinator may launch different jobs for each database, and then perform a merge in memory. Key value pairs may represent the stored query plan specifications, and may be used to identify the tables to be merged.

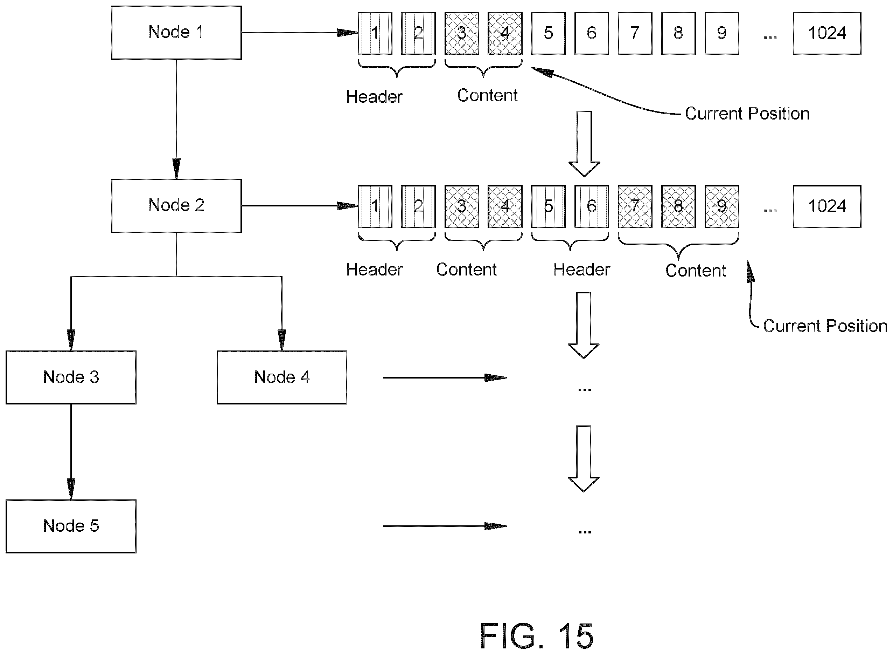

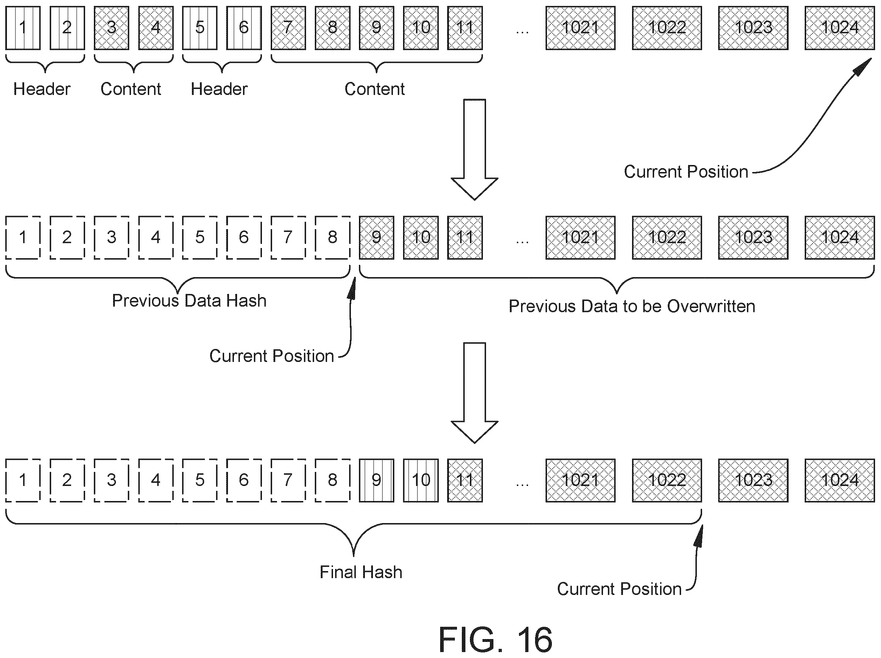

Figs. 15-16 illustrate an example of generating a plan identifier. As shown in Fig. 15, a plan node is traversed to generate a plan identifier, hashing the header and/or content to generate a hash. At a first node, for example, the header and content are hashed and used to fill a buffer. At a second node, the header and content are hashed and appended to the hash of the first node in the buffer to fill the next several sequential positions in the buffer. Once all nodes have been traversed, the entire buffer may be hashed. For example, Fig. 16 illustrates the buffer as entirely filled. The buffer is hashed to conserve space, such that additional hashes can be generated and stored in the buffer.

### Example Computing Environment

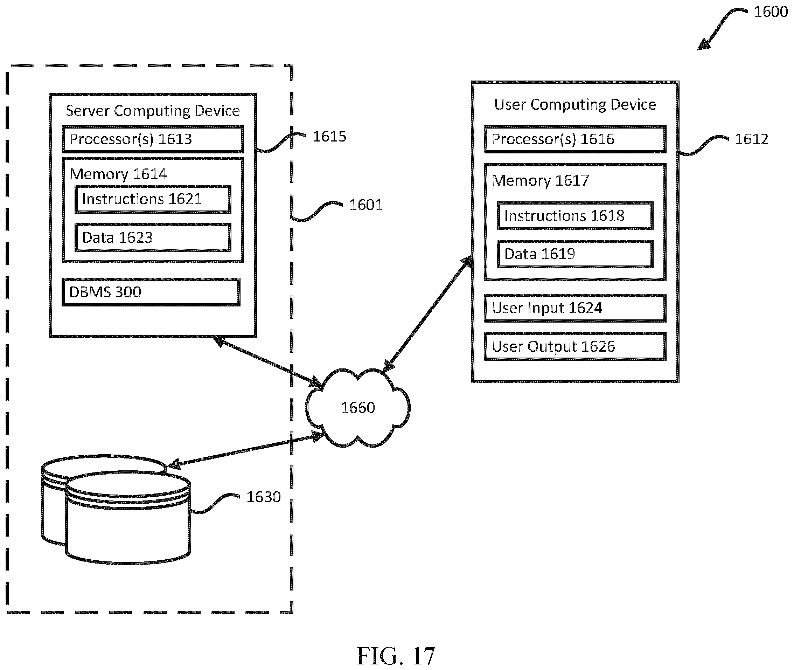

FIG. 17 is a block diagram of an example computing environment 1600 implementing the database management system (DBMS) 300, according to aspects of the disclosure.

The DBMS 300 can be implemented on one or more devices having one or more processors in one or more locations, such as in server computing device 1615. User computing device 1612 and the server computing device 1615 can be communicatively coupled to one or more storage device(s) 1630 over a network 1660. The server computing device 1615 and storage device(s) 1630 can form part of a computing platform 1601. The computing platform 1601 can be a cloud computing platform, offering a variety of different services, for example for providing compute and storage resources to users of the platform.

The storage device(s) 1630 can be a combination of volatile and non-volatile memory and can be at the same or different physical locations than the computing devices 1612, 1615. For example, the storage device(s) 1630 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 1615 can include one or more processors 1613 and memory 1614. The memory 1614 can store information accessible by the processor(s) 1613, including instructions 1621 that can be executed by the processor(s) 1613. The memory 1614 can also include data 1623 that can be retrieved, manipulated, or stored by the processor(s) 1613. The memory 1614 can be a type of non-transitory computer readable medium capable of storing information accessible by the processor(s) 1613, such as volatile and non-volatile memory. The processor(s) 1613 can include one or more central processing units (CPUs), graphic processing units (GPUs), field-programmable gate arrays (FPGAs), and/or application-specific integrated circuits (ASICs), such as tensor processing units (TPUs).

The instructions 1621 can include one or more instructions that when executed by the processor(s) 1613, cause the one or more processors to perform actions defined by the instructions. The instructions 1621 can be stored in object code format for direct processing by the processor(s) 1613, or in other formats including interpretable scripts or collections of independent source code modules that are interpreted on demand or compiled in advance. The instructions 1621 can include instructions for implementing the system 100 consistent with aspects of this disclosure. The DBMS 300 can be executed using the processor(s) 1613, and/or using other processors remotely located from the server computing device 1615.

The data 1623 can be retrieved, stored, or modified by the processor(s) 1613 in accordance with the instructions 1621. The data 1623 can be stored in computer registers, in a relational or non-relational database as a table having a plurality of different fields and records, or as JSON, YAML, proto, or XML documents. The data 1623 can also be formatted in a computer-readable format such as, but not limited to, binary values, ASCII, or Unicode. Moreover, the data 1623 can include information sufficient to identify relevant information, such as numbers, descriptive text, proprietary codes, pointers, references to data stored in other memories, including other network locations, or information that is used by a function to calculate relevant data.

The user computing device 1612 can also be configured similar to the server computing device 1615, with one or more processors 1616, memory 1617, instructions 1618, and data 1619. The user computing device 1612 can also include a user output 1626, and a user input 1624. The user input 1624 can include any appropriate mechanism or technique for receiving input from a user, such as keyboard, mouse, mechanical actuators, soft actuators, touchscreens, microphones, and sensors.

The server computing device 1615 can be configured to transmit data to the user computing device 1612, and the user computing device 1612 can be configured to display at least a portion of the received data on a display implemented as part of the user output 1626. The user output 1626 can also be used for displaying an interface between the user computing device 1612 and the server computing device 1615. The user output 1626 can alternatively or additionally include one or more speakers, transducers or other audio outputs, a haptic interface or other tactile feedback that provides non-visual and non-audible information to the platform user of the user computing device 1612.

Although FIG. 17 illustrates the processors 1613, 1616 and the memories 1614, 1617 as being within the computing devices 1615, 1612, components described in this specification, including the processors 1613, 1616 and the memories 1614, 1617 can include multiple processors and memories that can operate in different physical locations and not within the same computing device. For example, some of the instructions 1621, 1618 and the data 1623, 1619 can be stored on a removable SD card and others within a read-only computer chip. Some or all of the instructions and data can be stored in a location physically remote from, yet still accessible by, the processors 1613, 1616. Similarly, the processors 1613, 1616 can include a collection of processors that can perform concurrent and/or sequential operation. The computing devices 1615, 1612 can each include one or more internal clocks providing timing information, which can be used for time measurement for operations and programs run by the computing devices 1615, 1612.

The server computing device 1615 can be configured to receive requests to process data from the user computing device 1612. For example, the environment 1600 can be part of a computing platform configured to provide a variety of services to users, through various user interfaces and/or APIs exposing the platform services. One or more services can be a machine learning framework or a set of tools for generating neural networks or other machine learning models according to a specified task and training data. The user computing device 1612 may receive and transmit data specifying target computing resources to be allocated for executing a neural network trained to perform a particular neural network task.

The devices 1612, 1615 can be capable of direct and indirect communication over the network 1660. The devices 1615, 1612 can set up listening sockets that may accept an initiating connection for sending and receiving information. The network 1660 itself can include various configurations and protocols including the Internet, World Wide Web, intranets, virtual private networks, wide area networks, local networks, and private networks using communication protocols proprietary to one or more companies. The network 1660 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 1660, in addition or alternatively, can also support wired connections between the devices 1612, 1615, including over various types of Ethernet connection.

Although a single server computing device 1615 and user computing device 1612 are shown in FIG. 17, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital circuits, computer-readable storage media, as one or more computer programs, or a combination of one or more of the foregoing. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

While operations shown in the drawings and recited in the claims are shown in a particular order, it is understood that the operations can be performed in different orders than shown, and that some operations can be omitted, performed more than once, and/or be performed in parallel with other operations. Further, the separation of different system components configured for performing different operations should not be understood as requiring the components to be separated. The components, modules, programs, and engines described can be integrated together as a single system or be part of multiple systems.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system comprising:
one or more processors configured to:
analyze an execution history for a particular query;
automatically generate recommendations for improving query performance based on the execution history; and
tune the particular query based on the recommendations.

2. The system of claim 1, wherein the one or more processors are further configured to:
analyze query plans for the particular query;
automatically generate the recommendations based further on the analysis of the query plans.

3. The system of claim 2, wherein the analyzing comprises one or more of:
identifying query rewrite opportunities;
identifying plan opportunities;
identifying execution opportunities;
identifying statistics opportunities; or
identifying indexes and columnarization opportunities.

4. The system of one of claims 1 to 3,
wherein the one or more processors are further configured to output the recommendations for display to a user; and
wherein, optionally, the one or more processors are further configured to receive input from the user, the input selecting one or more recommendations to implement.

5. The system of one of claims 1 to 4,
wherein the analyzing is performed automatically at predetermined times, or wherein the analyzing is performed for each query plan executed by a database management system.

6. The system of one of claims 1 to 5, wherein the one or more processors are configured to track plans in a current query.

7. The system of claim 6, wherein in tracking plans, the one or more processors are configured to:
perform initial operations on an in-memory table;
synchronize, using a job scheduler, data between the in-memory table and persistent tables in accordance with a pre-defined schedule.

8. The system of claim 6, wherein for a new query plan, the one or more processors are configured to insert new entries into an in-memory table; and
update statistics associated with each entry when the system reaches a stable state.

9. The system of one of claims 1 to 8, further comprising a plan management engine configured to:
track all query plans and their execution statistics;
discover plans that are faster than approved plans; and
provide an interface for a user to approve or reject the discovered plans.

10. The system of claim 9, wherein the plan management engine comprises:
a unique plan tracker;
managed plan mapping; and
an optimizer; and/or
wherein the plan management engine stores one or more tables identifying tracked plans and managed plans, wherein background processes in the plan management engine:
synchronize the tracked plans with the unique plan tracker;
load managed plans on startup to the managed plan mapping; and
steer managed plans to the optimizer.

11. A computer-implemented method comprising:
analyzing, with one or more processors, an execution history for a particular query;
automatically generating, with the one or more processors, recommendations for improving query performance based on the execution history; and
tuning, with the one or more processors, the particular query based on the recommendations.

12. The method of claim 11, further comprising:
analyzing query plans for the particular query;
automatically generating the recommendations based further on the analysis of the query plans; and
wherein the analyzing optionally comprises one or more of:
identifying query rewrite opportunities;
identifying plan opportunities;
identifying execution opportunities;
identifying statistics opportunities; or
identifying indexes and columnarization opportunities.

13. The method of claim 11 or 12, wherein the analyzing is performed automatically at predetermined times; and/or
further comprising tracking plans in a current query, the tracking comprising:
performing initial operations on an in-memory table;
synchronizing, using a job scheduler, data between the in-memory table and persistent tables in accordance with a pre-defined schedule.

14. The method of one of claims 11 to 13, further comprising:
tracking all query plans and their execution statistics;
discovering plans that are faster than approved plans; and
providing an interface for a user to approve or reject the discovered plans.

15. A computer program comprising instructions which, when the program is executed by one or more processors of a computer, cause the computer to carry out the method of one of claims 11 to 14.
